# EUROPÄISCHE PATENTSCHRIFT

(11) **EP 0 319 518 B1**
(45) Veröffentlichungstag und Bekanntmachung des Hinweises auf die Patenterteilung: **12.05.1993**
(21) Anmeldenummer: 89100858.3
(22) Anmeldetag: 26.09.1988
(51) Int. Cl.: B01D 29/96, B01D 35/30, B01D 29/11

(54) **Ölfilter für die Reinigung von Schmieröl**
Oil filter for the purification of lubricating oil
Filtre à huile pour la purification d'huile de graissage

(30) Priorität: 04.11.1987 DE 8714656 U
(43) Veröffentlichungstag der Anmeldung: 07.06.1989
(62) Teilanmeldung aus: 88115792.9
(73) Patentinhaber: Ing. Walter Hengst GmbH & Co. KG, 48147 Münster (DE)
(72) Erfinder: Baumann, Dieter, D-4402 Greven-Gimbte (DE); Prinz, Norbert, D-4402 Greven 1 (DE)
(74) Vertreter: Schulze Horn, Stefan, Dipl.-Ing.

(56) Entgegenhaltungen:
- DE-A- 3 538 589
- DE-C- 3 543 437
- GB-A- 2 004 472

## Beschreibung

Die Erfindung betrifft einen Ölfilter für die Reinigung von Schmieröl, insbesondere für Verbrennungsmotoren von Kraftfahrzeugen, nach dem Oberbegriff des Patentanspruchs 1.

Ein derartiger Ölfilter ist aus der DE-A-3 538 589 bekannt, wobei der bekannte Ölfilter auch einen Ableitungskanal aufweist, der bei angesetzer Ölfilterpatrone geschlossen und bei herausgenommener Ölfilterpatrone geöffnet ist, um einen Abfluß des Restöls im Filtergehäuse zu ermöglichen.

Weiter ist eine Ausgestaltung des bekannten Ölfilters dadurch gekennzeichnet, daß die Ölfilterpatrone an einem oberseitigen Gehäusedeckel rastend angeklemmt ist. Die Ausbildung ist dergestalt, daß der Halter der Ölfilterpatrone endseitig auf einem longitudinalen Vorsprung des Gehäusedeckels rastend aufgeschnappt werden kann, wobei eine Verdickung und eine Verengung ein ungewolltes Lösen verhindern und grundsätzlich eine Trennung dieser Teile ermöglichen, damit der Gehäusedeckel mehrfach verwendet werden kann.

Wenn auch der bekannte Ölfilter sich besonders bei der Abdichtung des Ableitungskanals als vorteilhaft erwiesen hat und auch ein Fortschritt gegenüber früheren Ölfiltern dadurch erreicht wird, daß die Ölfilterpatrone beim Patronenwechsel vom Deckel gelöst wird, so daß der Deckel mehrfach verwendbar ist, so wird doch als Nachteil empfunden, daß das Lösen der Patrone vom Deckel durch Ergreifen beider Teile mit den Händen erfolgen muß, wobei erfahrungsgemäß die ausführende Person sich mit Altöl beschmutzt.

Aus diesem Grunde ist es vorgekommen, daß der vorgeschriebene Patronenwechsel nicht ausgeführt wurde, weil die schmutzige Arbeit gescheut wurde.

Es ist auch ein Ölfilter nach der DE-C-3 543 437 bekannt. Bei diesem Schmierölfilter für Verbrennungsmotoren mit einem auswechselbaren Filtereinsatz, einem abzudeckenden Gehäusehauptteil mit einem abnehmbaren glockenförmigen Gehäusedeckel, der über eine Mittelschraube mit dem Gehäusehauptteil verbunden ist, sollen größere Spannungen in dem Gehäusedeckel aus Kunststoff vermieden werden. Dies wird dadurch erreicht, daß die Schraube mit einem Anschlag versehen wird, der bewirkt, daß beim Festziehen der Schraube der Schraubenhub begrenzt wird. Zum gegenseitigen Abdichten von Gehäusehauptteil und Gehäusedeckel ist eine Radialdichtung vorgesehen. Um ein Einfallen des Gehäusedeckels an seinem offenen Ende zu verhindern, liegt an dessen inneren Umfang ein Stützring aus Metall an.

Eine Ausgestaltung dieses Ölfilters sieht vor, daß am geschlossenen Ende des Gehäusedeckels innen zur Halterung des Filtereinsatzes axial nach innen ragende, federnde an den Gehäusedeckel angebundene, mit Ausnehmungen zur klemmenden Aufnahme des Filtereinsatzes versehene Rippen vorgesehen sind.

Der Nachteil dieses Ölfilters liegt jedoch darin, daß die Filterpatrone tief in dem glockenförmigen Deckel eingebaut ist, so daß ein Herausnehmen beim Patronenwechsel sehr schwierig und nur unter Verwendung geeigneter Werkzeuge möglich ist, so daß die Gefahr der Ölverschmutzung noch größer ist als bei dem erstbeschriebenen Ölfilter.

Es stellt sich daher die Aufgabe, einen Ölfilter der eingangs genannten Art zu schaffen, der die aufgeführten Nachteile vermeidet und der insbesondere kostengünstiger herstellbar und benutzbar ist.

Die Lösung dieser Aufgabe gelingt erfindungsgemäß durch einen Ölfilter der eingangs genannten Art, welcher dadurch gekennzeichnet ist, daß
der Schraubdeckel und die Filterpatrone eine Übertragung von axialen Kräften von beiden Richtungen auf die Filterpatrone ermöglichend miteinander verrastet sind, wobei
der Schraubdeckel an seiner Innenseite mehrere auf einem Kreis angeordnete, in das Filterinnere vorragende Federzungen mit Rastvorsprüngen aufweist und
die Filterpatrone an ihrem deckelseitigen Ende eine kreisförmige, zu den Rastvorsprüngen passende, taillierte Rastausnehmung besitzt, wobei die Federzungen bis zum Boden der Rastausnehmung ragen.

Die überraschende Wirkung der Erfindung besteht darin, daß die Bedienungsperson beim Wechsel der Filterpatrone nur den Deckel mit der daran rastend befestigten Filterpatrone mit einer Hand ergreifen muß, die Filterpatrone schräg mit dem freien Ende auf eine Unterlage abstützt und durch leichten Druck mit der Hand die Filterpatrone aus der Rasterung löst, wobei die Filterpatrone nicht angefaßt wird, und worauf die Filterpatrone abfällt.

Die Erfindung wird im folgenden anhand zweier Zeichnungen erläutert. Die Zeichnungen zeigen in
- Figur 1: einen Ölfilter mit eingesetzter Filterpatrone im Längsschnitt und in
- Figur 2: eine vergrößerte Darstellung des deckelseitigen Abschnitts des Ölfilters.

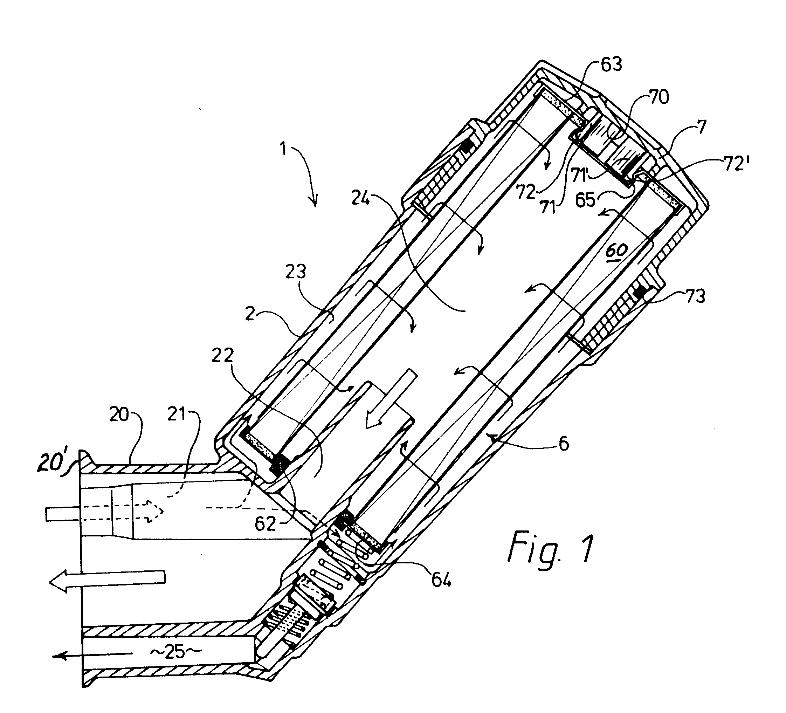

Wie die Figur 1 zeigt, besteht der Ölfilter 1 im wesentlichen aus einem Filtergehäuse 2 mit Sockel 20, einer in das Gehäuse 2 eingesetzten, auswechselbaren Ölfilterpatrone 6 und einem das Gehäuse oberseitig abschließenden Schraubdeckel 7. Die Längsachse des Filtergehäuses 2 verläuft schräg nach oben weisend, so daß sich eine annähernd stehende Lage des Filtergehäuses 2 ergibt. Der Sockel 20 des Filtergehäuses 2 ist gegenüber der Längsachse des Gehäuses 2 abgewinkelt und endet in einer im wesentlichen vertikal verlaufenden Flanschfläche 20', die zur Verbindung des Ölfilters 1 mit einem nicht dargestellten Verbrennungsmotor eines Kraftfahrzeuges dient. Weiterhin dient der Sockel 20, wie durch Strömungspfeile angedeutet, zur Zuführung und Abführung von Öl. Verschmutztes Öl gelangt durch einen Öleinlaß 21 im hinteren, oberen Teil des Sockels 20 in einen die Filterpatrone 6 umgebenden Einlaßraum 23 und verteilt sich dort über den Umfang der Patrone 6. Nach dem Durchströmen der Filterpatrone 6, genauer deren Filterstoffkörpers 60, sammelt sich das nunmehr gereinigte Öl im Innenbereich 24 des Filters 1 und strömt von dort - entsprechend den eingezeichneten Strömungspfeilen - durch einen zentralen Ölauslaß 22 und den Sockel 20 wieder ab. Der Einlaßraum 23 und der Innenbereich 24 des Ölfilters 1 sind dabei durch einen Dichtring 62, vorzugsweise aus Gummi, am unteren Stirnende 64 der Filterpatrone 6 durch den Deckel 7 am oberen Stirnende 63 der Patrone 6 voneinander getrennt.

Im unteren Teil des Sockels 20 verläuft ein Ableitungskanal 25, der dazu dient, daß in dem Gehäuse 2 des Ölfilters 1 befindliche Öl beim Austausch der Filterpatrone 6 abzuleiten. Im normalen Betrieb des Ölfilters 1, d.h. bei eingesetzter Filterpatrone 6, ist der Ableitungskanal 25 dagegen gesperrt.

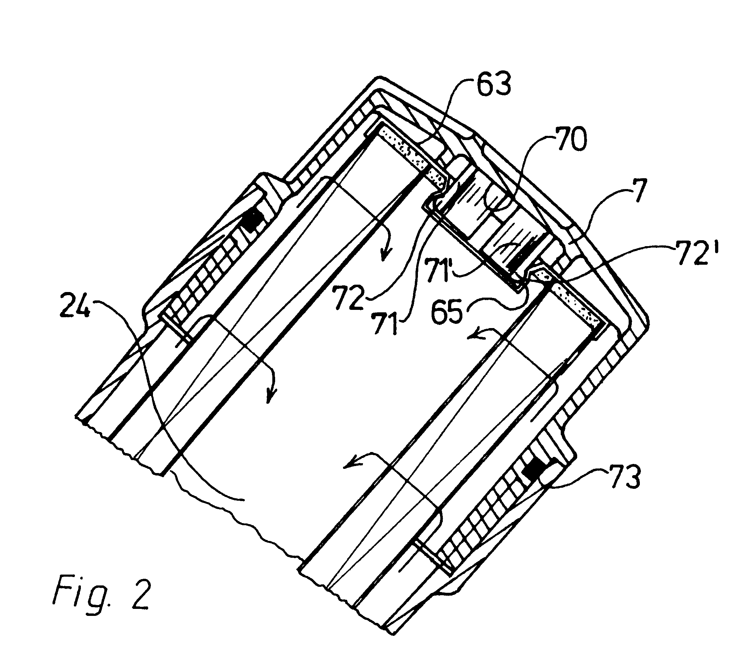

Mit Bezugnahme auf Figur 2 ist bei dem Ölfilter 1 die Filterpatrone 6 und der Schraubdeckel 7 lösbar miteinander verbunden. Hierzu besitzt der Schraubdeckel 7 an seiner Innenseite 70 mehrere Federzungen 71 und 71', von denen zwei sichtbar sind. Die Federzungen 71 und 71' sind auf einem zur Längsachse des Filtergehäuses 2 konzentrischen Kreis angeordnet und ragen von der Deckelinnenseite 70 in das Innere des Filtergehäuses 2. An ihrem inneren Ende besitzen die Federzungen 71 und 71' nach außen vorstehende Rastvorsprünge 72 und 72', die bei in das Gehäuse 2 eingesetzter Filterpatrone 6 in eine passende, taillierte Rastvertiefung 65 in der oberen Stirnseite 63 der Filterpatrone 6 eingreifen. Hierdurch wird erreicht, daß von dem Schraubdeckel 7 axiale Kräfte in beiden Richtungen auf die Filterpatrone 6 übertragen werden können und daß die Filterpatrone 6 durch Abkanten leicht und umweltfreundlich vom Schraubdeckel 7 gelöst werden kann. Die Verbindung des Schraubdeckels 7 mit dem Filtergehäuse 2 erfolgt bei dem hier dargestellten Ausführungsbeispiel des Ölfilters 1 unter Zwischenlage eines Dichtringes 73 durch Verschrauben.

## Patentansprüche

1. Ölfilter für die Reinigung von Schmieröl, insbesondere für Verbrennungsmotoren von Kraftfahrzeugen, mit einem im Einbauzustand zumindest annähernd stehend angeordneten Filtergehäuse (2), mit einem Schraubdeckel (7), mit einer in dieses Filtergehäuse (2) eingesetzten ringförmigen Ölfilterpatrone, ferner mit einem Öleinlaß (21) für die Ölfilterpatrone (6) umströmendes, verunreinigtes Öl und mit einem mit dem zentralen Innenbereich des Filtergehäuses (2) verbundenen Ölauslaß (25) für gereinigtes Öl in einem Sockel (20) am unteren Ende des Filtergehäuses (2),
**dadurch gekennzeichnet,**
daß der Schraubdeckel (7) und die Filterpatrone (6) eine Übertragung von axialen Kräften von beiden Richtungen auf die Filterpatrone (6) ermöglichend miteinander verrastet sind, wobei
der Schraubdeckel (7) an seiner Innenseite (70) mehrere auf einem Kreis angeordnete, in das Filterinnere (24) vorragende Federzungen (71, 71') mit Rastvorsprüngen (72, 72') aufweist und
die Filterpatrone (6) an ihrem deckelseitigen Ende eine kreisförmige, zu den Rastvorsprüngen (72, 72') passende, taillierte Rastausnehmung besitzt, wobei die Federzungen (71, 71') bis zum Boden der Rastausnehmung ragen.

## Claims

1. An oil filter for cleaning lubricating oil, in particular for internal combustion engines of motor vehicles, with a filter housing (2) which in the assembled state is arranged at least approximately vertically, with a screw-on cover (7), with an annular oil filter cartridge (6) inserted into said filter housing (2), furthermore with an oil inlet (21) for contaminated oil flowing around the oil filter cartridge (6) and with an oil outlet (25) for cleaned oil connected to the central inner region of the filter housing in a base (20) at the lower end of the filter housing (2),
characterised in that the screw-on cover (7) and the filter cartridge (6) are locked together permitting transmission of axial forces to the filter cartridge (6) from both directions, in which
the screw-on cover (7) has on its inside (70) a plurality of spring tongues (71, 71') with catch projections (72, 72') arranged in a circle and projecting into the interior of the filter (24) and the filter cartridge (6) on its cover-side end has one waisted circular catch recess to fit the catch projections (72, 72'), the spring tongues (71, 71') extending as far as the bottom of the catch recess.

## Revendications

1. Filtre à huile pour l'épuration d'huile de graissage, en particulier pour des moteurs à combustion de véhicules, comprenant, à l'état monté, un boîtier de filtre (2) disposé de façon au moins sensiblement verticale, un couvercle à visser (7), une cartouche de filtre annulaire insérée dans ce boîtier de filtre (2), et en outre dans un socle (20) à l'extrémité inférieure du boîtier de filtre (2), une entrée d'huile (21) pour l'huile non-épurée traversant la cartouche de filtre (6) sur toute sa périphérie et une sortie d'huile pour l'huile épurée (25) reliée à la zone intérieure centrale du boîtier de filtre (2), caractérisé en ce que, le couvercle à visser (7) et la cartouche de filtre (6) sont verrouillés l'un par rapport à l'autre d'une façon permettant la transmission des forces axiales dans les deux directions sur la cartouche de filtre (6), en ce que le couvercle à visser (7) comporte sur sa face intérieure (70) plusieurs languettes élastiques (71, 71') disposées sur un cercle, faisant saillie vers l'intérieur (24) du filtre et qui sont munies de parties de verrouillage en saillie (72, 72') et en ce que la cartouche de filtre (6) comporte, à son extrémité située du côté du couvercle, une cavité de verrouillage entaillée et s'ajustant exactement sur les parties en saillie de verrouillage (72, 72'), les languettes élastiques (71, 71') venant faire saillie jusqu'au fond de la cavité de verrouillage.
